# EUROPÄISCHE PATENTSCHRIFT

(11) **EP 3 669 960 B1**
(45) Veröffentlichungstag und Bekanntmachung des Hinweises auf die Patenterteilung: **21.04.2021**
(21) Anmeldenummer: 19217126.2
(22) Anmeldetag: 17.12.2019
(51) Int. Cl.: B01D 29/21, B01D 35/153, B01D 35/16

(54) **FILTEREINRICHTUNG**
FILTER DEVICE
DISPOSITIF FILTRANT

(30) Priorität: 20.12.2018 DE 102018222578
(43) Veröffentlichungstag der Anmeldung: 24.06.2020
(73) Patentinhaber: Mahle International GmbH, 70376 Stuttgart (DE)
(72) Erfinder: BRAUNHEIM, Michael, 73035 Göppingen (DE)
(74) Vertreter: BRP Renaud & Partner mbB Rechtsanwälte Patentanwälte Steuerberater

(56) Entgegenhaltungen:
- EP-A1- 2 995 358
- DE-A1-102009 050 158

## Beschreibung

Die vorliegende Erfindung betrifft eine Filtereinrichtung mit einem in einem Filtergehäuse stehend angeordneten Ringfilterelement, welches eine obere und eine untere Endscheibe aufweist, gemäß dem Oberbegriff des Anspruchs 1. Die Erfindung betrifft außerdem ein Ringfilterelement für eine derartige Filtereinrichtung.

Eine gattungsgemäße Filtereinrichtung ist hinlänglich bekannt, beispielsweise aus der DE 10 2009 050 158 A1, und in nahezu sämtlichen modernen Kraftfahrzeugen zu finden, eingesetzt beispielsweise als Öl- oder Kraftstofffilter.

Aus der EP 2 995 358 A1 ist ebenfalls ein Ringfilterelement mit einer oberen und einer unteren Endscheibe bekannt, wobei zwei stutzenförmig abstehende Pins vorgesehen sind.

Für den Servicefall gibt es bei bekannten Flüssigfiltereinrichtungen üblicherweise einen Leerlaufkanal, über welchen noch im Filtergehäuse vorhandene Flüssigkeit abgelassen und an einem unerwünschten Austreten in die Umgebung gehindert werden kann. Der Leerlaufkanal wird im Stand der Technik normalerweise mit einem Pin am Ringfilterelement verschlossen. Bei einer Schieflage der Flüssigfiltereinrichtung kann es beim Wechsel des Ringfilterelements jedoch vorkommen, dass die Flüssigfiltereinrichtung nicht vollständig entleert wird und es zu Verschmutzungen der Oberflächen auf der Reinseite kommt, die in der Folge zum Motor gelangen und dort zu Schäden führen.

Um darüber hinaus eine einwandfreie Filterwirkung gewährleisten zu können, ist es für die Hersteller von derartigen Filtereinrichtungen wichtig, dass nur von ihnen selbst autorisierte oder hergestellte Filterelemente eingesetzt werden. Beim Einsatz von Filterelementen fremder Fabrikate oder Imitaten können nämlich nicht nur die Filterleistung beeinträchtigt, sondern zugleich auch Schäden an der Filtereinrichtung verursacht werden. Auf der anderen Seite ist es wünschenswert, Filterelemente für derartige Filtereinrichtungen möglichst kostengünstig herstellen und anbieten zu können.

Die vorliegende Erfindung beschäftigt sich daher mit dem Problem, für eine Filtereinrichtung der gattungsgemäßen Art, eine verbesserte oder zumindest eine alternative Ausführungsform anzugeben, welche insbesondere die Wartung vereinfacht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, anstatt bislang lediglich einen einzigen Leerlaufkanal nunmehr zumindest zwei Leerlaufkanäle vorzusehen, die im Betriebszustand von zwei axial und exzentrisch von einem Ringfilterelement abstehenden Pins verschlossen werden. Die zumindest zwei Leerlaufkanäle sind dabei um mindestens 120° in Umfangsrichtung des Ringfilterelements versetzt, sodass auch bei einer Schiefstellung der Filtereinrichtung ein problemloses und zugleich auch schnelles Entleeren ermöglicht wird. Die erfindungsgemäße Filtereinrichtung besitzt ein in einem Filtergehäuse stehend angeordnetes Ringfilterelement, das eine obere Endscheibe und eine untere Endscheibe aufweist. Es ist vorgesehen, dass das Ringfilterelement zumindest zwei abstehende, stutzenförmige Pins aufweist, die beide im Einbauzustand jeweils in einen zugehörigen Leerlaufkanal eingreifen und dass der zweite Pin um mindestens 120° in Umfangsrichtung des Ringfilterelements versetzt zum ersten Pin angeordnet ist. Erfindungsgemäß sind drei Pins vorgesehen, die in Umfangsrichtung um ca. 120° versetzt zueinander angeordnet sind.

Die erfindungsgemäße Filtereinrichtung besitzt dabei den Vorteil, dass auch bei Schieflage des Systems die Flüssigkeit sicher abgelassen werden kann. Insbesondere bei Filtereinrichtungen, die in unterschiedlichen Anwendungen in LKWs als auch im stationären Betrieb mit unterschiedlichen Einbaulagen verwendet werden, ist der zweite Pin ein großer Vorteil, weil beim Wechsel des (Ring-)Filterelements wegen des deutlich niederen Niveaus des in der Filtereinrichtung verbleibenden Mediums die Verschmutzung des Reinbereichs mit ungefiltertem Kraftstoff bzw.- Medium für alle Einbaulagen ausgeschlossen ist. Zudem kann durch den zweiten Leerlaufkanal der Ablassvorgang insgesamt beschleunigt werden. Durch die Pins kann durch deren Form, Größe und Gestalt auch ein verbessertes Schlüssel-Schloss-System geschaffen werden, welches dazu beiträgt, sicherzustellen, dass nur qualitativ hochwertige Ringfilterelemente eingesetzt werden. Bei einem Ringfilterelement mit nur einem Pin bleibt ein Leerlaufkanal offen und die Filtereinrichtung funktioniert nicht. Selbst bei einem Ringfilterelement mit zwei Pins, müssen diese hinsichtlich Position, Größe und Gestalt auf die zugehörigen Leerlaufkanäle abgestimmt sein, um ein einwandfreies Funktionieren der Filtereinrichtung gewährleisten zu können. Bei drei erfindungsgemäß angeordneten Pins kann ein nochmals verbessertes Entleeren des Filtergehäuses im Wartungsfall und ein nochmals verbessertes Schlüssel-Schloss-System geschaffen werden.

Bei einer vorteilhaften Weiterbildung der erfindungsgemäßen Filtereinrichtung ist vorgesehen, dass zumindest zwei Pins in zwei separate Leerlaufkanäle oder in jeweils ein Teilstück eines gemeinsamen Leerlaufkanals eingreifen. Durch zwei gänzlich separate Leerlaufkanäle, die getrennt voneinander zu einem Tank führen, kann der Entleerungsvorgang schneller und selbst bei verstopftem erstem oder zweitem Leerlaufkanal erfolgen. Durch einen Y-förmigen Leerlaufkanal, der an seinen beiden Y-Armen jeweils einen Pin aufnimmt, kann eine kompakte Bauweise erreicht werden, da keine zwei separaten Leerlaufkanäle vorgesehen werden müssen.

Bei einer vorteilhaften Weiterbildung der erfindungsgemäßen Lösung ist an der unteren Endscheibe ein Schmutztopf mit einem darin angeordneten Wasserabscheider vorgesehen, wobei zumindest zwei Pins am Schmutztopf angeordnet sind. Dabei ist der innerhalb des Schmutztopfes angeordnete Wasserabscheider vorzugsweise als Coaleszer ausgebildet und gleichzeitig an die untere Endscheibe des Ringfilterelementes angeschweißt. Ein derartiger Coaleszer ist in der Lage, Wasserpartikel zu sammeln und abzuleiten und damit beispielsweise im Kraftstoff vorhandene Wasseranteile herauszufiltern, so dass diese nicht in den Verbrennungsmotor gelangen und dort Korrosionsschäden verursachen können. Die Filtereinrichtung kann in diesem Fall beispielsweise als Öl- oder Kraftstofffilter ausgebildet sein, wobei ganz generell auch eine Ausbildung als Luftfilter denkbar ist. Der Wasserabscheider ist dabei an die untere Endscheibe des Ringfilterelementes angebunden, insbesondere angeschweißt, und kann dadurch vor der Montage bzw. vor dem Schließen des Schmutztopfes exakt positioniert und fixiert werden, was den Herstellungsprozess der erfindungsgemäßen Filtereinrichtung deutlich vereinfacht.

Bei einer weiteren vorteilhaften Ausführungsform der erfindungsgemäßen Lösung, ist am Filtergehäusetopf oder an einem darin angeordneten Funktionselement eine Führung vorgesehen, entlang welcher zumindest einer der Pins bei der Montage des Ringfilterelementes zum Kanal geführt wird. Eine derartige Führung kann beispielsweise in der Art einer Rampe ausgebildet sein, welche ein beliebiges Einsetzen des Ringfilterelementes ermöglicht, so dass dieses mittels des Pins entlang der Führung in den zugehörigen Kanal gleitet und dadurch eine stets richtige Montage gewährleistet werden kann. Eine derartige Führung kann zum einen kostengünstig, beispielsweise durch ein geeignetes Spritzgusswerkzeug, realisiert werden und gewährleistet zum anderen ein deutlich vereinfachtes Handling der erfindungsgemäßen Filtereinrichtung, da das Ringfilterelement in einer beliebigen Drehwinkellage in den Filtergehäusetopf eingesetzt werden und durch ein einfaches Verdrehen in seine richtige und korrekte Stellung überführt werden kann. Eine Fehlmontage des Ringfilterelementes kann dadurch zuverlässig ausgeschlossen werden.

Zweckmäßig weisen zumindest zwei Pins eine unterschiedliche axiale Länge und/oder einen unterschiedlichen Durchmesser auf, wobei der zugehörige Leerlaufkanal einen komplementären Innendurchmesser aufweist. Hierdurch kann das Schlüssel-Schloss-System nochmals verfeinert werden.

Bei einer vorteilhaften Weiterbildung ist an der unteren Endscheibe ein Schmutztopf mit einem darin angeordneten Wasserabscheider vorgesehen ist, wobei zumindest drei Pins vorgesehen sind, von denen zwei im Einbauzustand des Ringfilterelements in einen jeweiligen Leerlaufkanal eingreifen und der dritte Pin hohl ausgebildet ist und mit einem Innenraum des Schmutztopfes kommunizierend verbunden ist und in einen Entsorgungskanal eingreift. Der Schmutztopf ist dabei an der unteren Endscheibe des Ringfilterelementes angeordnet, beispielsweise angeschweißt, wobei die stutzenförmigen Pins üblicherweise einteilig mit dem Schmutztopf ausgebildet sind und ein Betrieb der Filtereinrichtung ausschließlich dann ermöglicht wird, sofern die Pins in die zugehörigen und am Filtergehäusetopf bzw. an einem Funktionselement angeordneten Kanäle eingreifen. Über einen der Pins, der hohl ausgebildet ist, kann somit der Wassersammelraum bzw. der im Schmutztopf gelegene Schmutzsammelraum entleert werden. Dieser hohl ausgebildete Pin ermöglicht so einen Wasser- und/oder Schmutzablass in einen separaten Wasser-/Schmutzsammelraum oder aber in die Umgebung, wobei in diesem Fall zusätzlich üblicherweise ein Aktivkohlefilter vorgesehen ist, welches noch im abgeschiedenen Wasser vorhandene Kohlenwasserstoffanteile herausfiltert. Die anderen Pins, die nicht hohl ausgebildet sind, dienen zum Verschließen der Leerlaufkanäle und greifen somit dichtend in diese ein, sofern sich das Ringfilterelement in seinem Einbauzustand befindet. Bei einem Entfernen des Ringfilterelements werden diese Pins aus den Leerlaufkanälen herausgezogen, wodurch das Filtergehäuse leerlaufen kann. Durch insbesondere eine unterschiedliche axiale Länge zwischen den drei Pins kann erreicht werden, dass der in den Entsorgungskanal eingreifende Pin erst dann aus diesem herausgezogen wird, wenn die anderen Pins schon lange aus dem zugehörigen Leerlaufkanal gezogen wurden, so dass die noch im Filtergehäuse vorhandene Flüssigkeit vollständig ablaufen kann, ohne dass die Gefahr besteht, dass die Flüssigkeit gleichzeitig in den Entsorgungskanal gelangt.

Die vorliegende Erfindung beruht weiter auf dem allgemeinen Gedanken, ein Ringfilterelement einer zuvor beschriebenen Filtereinrichtung anzugeben, das eine obere Endscheibe und eine untere Endscheibe aufweist, wobei drei Pins vorgesehen sind, die in Umfangsrichtung um ca. 120° versetzt zueinander angeordnet sind. Hierdurch kann auch bei einer Schiefstellung der Filtereinrichtung ein problemloses und zugleich auch schnelles Entleeren ermöglicht wird. Durch die Pins kann durch deren Form, Größe und Gestalt auch ein verbesserter Schlüssel zu einem Schlüssel-Schloss-System geschaffen werden, welches dazu beiträgt, sicherzustellen, dass nur qualitativ hochwertige Ringfilterelemente eingesetzt werden.

Bei einer vorteilhaften Weiterbildung der erfindungsgemäßen Lösung ist an der unteren Endscheibe ein Schmutztopf mit einem darin angeordneten Wasserabscheider vorgesehen, wobei zumindest zwei Pins am Schmutztopf angeordnet sind. Dabei ist der innerhalb des Schmutztopfes angeordnete Wasserabscheider vorzugsweise als Coaleszer ausgebildet und gleichzeitig an die untere Endscheibe des Ringfilterelementes angeschweißt. Ein derartiger Coaleszer ist in der Lage, Wasserpartikel zu sammeln und abzuleiten und damit beispielsweise im Kraftstoff vorhandene Wasseranteile herauszufiltern, so dass diese nicht in den Verbrennungsmotor gelangen und dort Korrosionsschäden verursachen können. Der Wasserabscheider ist dabei an die untere Endscheibe des Ringfilterelementes angebunden, insbesondere angeschweißt, und kann dadurch vor der Montage bzw. vor dem Schließen des Schmutztopfes exakt positioniert und fixiert werden, was den Herstellungsprozess der erfindungsgemäßen Filtereinrichtung deutlich vereinfacht.

Zweckmäßig weisen zumindest zwei Pins eine unterschiedliche axiale Länge aufweisen, und/oder einen unterschiedlichen Durchmesser auf, wobei der zugehörige Leerlaufkanal einen komplementären Innendurchmesser aufweist. Hierdurch kann das Schlüssel-Schloss-System nochmals verfeinert werden.

Bei einer vorteilhaften Weiterbildung sind drei Pins vorgesehen, von denen zwei im Einbauzustand des Ringfilterelements in einen jeweiligen Leerlaufkanal eingreifen und der dritte Pin hohl ausgebildet ist und mit einem Innenraum des Schmutztopfes kommunizierend verbunden ist und in einen Entsorgungskanal eingreift. Der Schmutztopf ist dabei an der unteren Endscheibe des Ringfilterelementes angeordnet, beispielsweise angeschweißt, wobei die stutzenförmigen Pins üblicherweise einteilig mit dem Schmutztopf ausgebildet sind und ein Betrieb der Filtereinrichtung ausschließlich dann ermöglicht wird, sofern die Pins in die zugehörigen und am Filtergehäusetopf bzw. an einem Funktionselement angeordneten Kanäle eingreifen. Über einen der Pins, der hohl ausgebildet ist, kann somit der Wassersammelraum bzw. der im Schmutztopf gelegene Schmutzsammelraum entleert werden. Dieser hohl ausgebildete Pin ermöglicht so einen Wasser- und/oder Schmutzablass in einen separaten Wasser-/Schmutzsammelraum oder aber in die Umgebung, wobei in diesem Fall zusätzlich üblicherweise ein Aktivkohlefilter vorgesehen ist, welches noch im abgeschiedenen Wasser vorhandene Kohlenwasserstoffanteile herausfiltert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Filtereinrichtung,
- Fig. 2: ein erfindungsgemäßes Ringfilterelement in einer Ansicht.

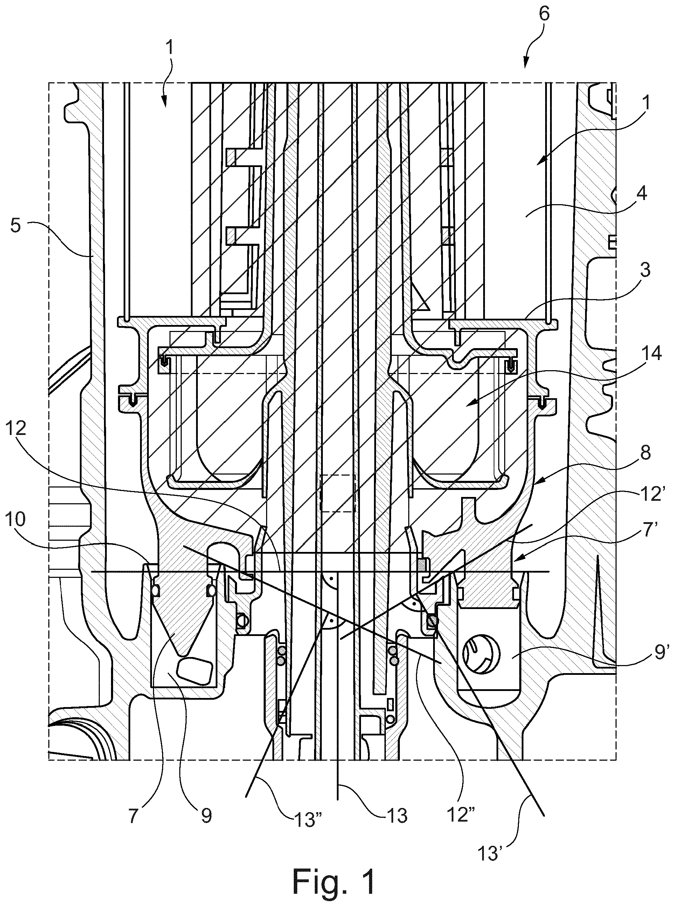

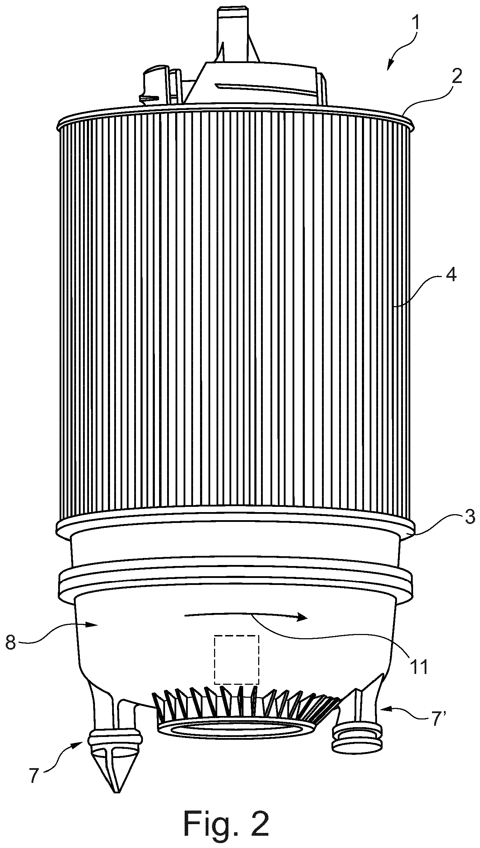

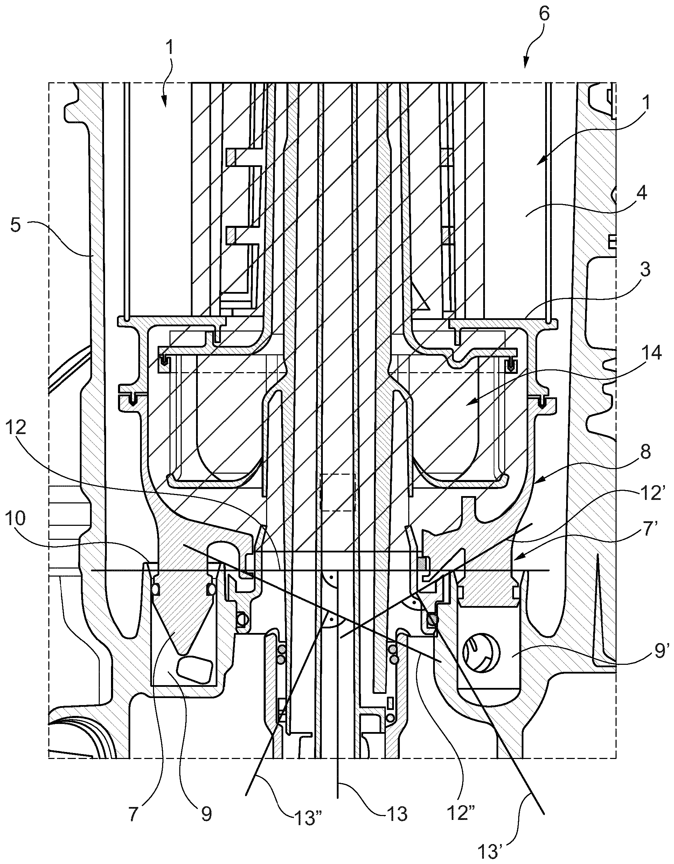

Entsprechend der Fig. 2, weist ein erfindungsgemäßes Ringfilterelement 1 eine obere Endscheibe 2 sowie eine untere Endscheibe 3 auf. Zwischen den beiden Endscheiben 2 und 3 ist dabei ein Filtermaterial 4, beispielsweise in der Art eines Faltensterns, angeordnet. Das Ringfilterelement 1 ist dabei ähnlich der gezeigten Darstellung in Fig. 1 stehend in einem Filtergehäusetopf 5 einer Filtereinrichtung 6, beispielsweise eines Öl- oder Kraftstofffilters, angeordnet. Erfindungsgemäß weist nun das Ringfilterelement 1 zumindest zwei abstehende, stutzenförmige Pins 7,7' auf, die beide im Einbauzustand jeweils in einen zughörigen Leerlaufkanal 9,9' eingreifen, wobei der zweite Pin 7' um mindestens 120° in Umfangsrichtung 11 des Ringfilterelements 1 versetzt zum ersten Pin 7 angeordnet ist.

Gemäß den Fig. 1 und 2 sind die beiden Pins 7,7' in Umfangsrichtung 11 um ca. 180° versetzt zueinander angeordnet sind, wobei auch vorgesehen sein kann, dass die beiden Pins 7,7' in Umfangsrichtung 11 um ca. 146° versetzt zueinander angeordnet sind.

An der unteren Endscheibe 3 ist ein Schmutztopf 8 mit einem darin angeordneten und nicht näher beschriebenen Wasserabscheider vorgesehen. Nach unten abstehend sind an dem Schmutztopf 8 zwei stutzenförmige Pins 7 und 7' vorgesehen, die komplementär zu zwei am Filtergehäusetopf 5 oder an einem in diesen einsetzbaren Funktionselement ausgebildeten Leerlaufkanälen 9,4 9' ausgebildet sind. Ein Betrieb der kompletten Filtereinrichtung 6 ist dabei ausschließlich dann möglich, sofern der Pin 7 in den Leerlaufkanal 9 und der Pin 7' in den Leerlaufkanal 9' eingreifen.

Generell kann der Wasserabscheider als sogenannter Coaleszer ausgebildet und an die untere Endscheibe 3 des Ringfilterelementes 1 angeschweißt sein. Das Anschweißen kann beispielsweise mittels Ultraschallschweißen, Reibschweißen oder Laserschweißen erfolgen und gewährleistet ein zuverlässiges Positionieren und Fixieren des Wasserabscheiders an der unteren Endscheibe 3 des Ringfilterelementes 1, so dass in einem anschließenden Arbeitsschritt der Schmutztopf 8 mit der Endscheibe 3 verbunden, insbesondere verschweißt werden kann.

Die erfindungsgemäße Filtereinrichtung 6 besitzt den großen Vorteil, dass sich bei einem senkrechtem Einbau 13, das heißt bei einem Einbau, bei welchem sich eine Achse des Ringfilterelements 1 lotrecht befindet, bzw. bei einer Schieflage 13', 13" des Systems, bei welcher die Achse des Ringfilterelements 1 von der Lotrechten abweicht, ein Flüssigkeitsspiegel 12, 12' bzw. 12" im Filtergehäusetopf 5 nach der Demontage des Ringfilterelementes 1 und Ablaufen der Flüssigkeit durch die Leerlaufkanäle 9 und 9' deutlich unterhalb eines Reinbereichs 14 im Inneren des Ringfilterelements 1 befindet. Wegen des deutlich niederen Niveaus des Flüssigkeitsspiegels 12, 12' bzw. 12" der in der Filtereinrichtung 6 verbleibenden Flüssigkeit, ist die Verschmutzung des Reinbereichs 14 (schraffierter Bereich) mit ungefiltertem Kraftstoff für alle Einbaulagen ausgeschlossen. Im Weiteren kann die Flüssigkeit sicher abgelassen und zudem durch den zweiten Leerlaufkanal 9' der Ablassvorgang insgesamt beschleunigt werden kann. Durch die zumindest zwei Pins 7, 7' kann durch deren Form, Größe und Gestalt auch ein verbessertes Schlüssel-Schloss-system geschaffen werden, welches dazu beiträgt, sicherzustellen, dass nur qualitativ hochwertige Ringfilterelemente 1 eingesetzt werden. Bei einem Ringfilterelement 1 mit nur einem Pin 7 oder 7' bleibt ein Leerlaufkanal 9, 9' offen und die Filtereinrichtung 6 funktioniert nicht. Selbst bei einem Ringfilterelement mit zwei Pins 7, 7', müssen diese hinsichtlich Anordnung, Größe und Gestalt auf die zugehörigen Leerlaufkanäle 9, 9' abgestimmt sein, um ein einwandfreies Funktionieren der Filtereinrichtung 6 gewährleisten zu können.

Durch die in Umfangsrichtung 11 um ca. 180° oder um ca. 146° versetzte Anordnung der Pins 7, 7' zueinander, kann einerseits ein zuverlässiges, schnelles und lageunabhängiges Entleeren der Filtereinrichtung 6 erfolgen und andererseits kann durch den gewählten Anordnungswinkel ein einfaches aber wirksames Schlüssel-Schloss-System geschaffen werden, welches den Einsatz autorisierter Ringfilterelemente 1 begünstigt.

Bei einer vorteilhaften Weiterbildung der erfindungsgemäßen Filtereinrichtung 6 ist vorgesehen, dass die zumindest zwei Pins 7, 7' in zwei separate Leerlaufkanäle 9, 9' oder in jeweils ein Teilstück eines gemeinsamen Leerlaufkanals 9 eingreifen. Durch zwei gänzlich separate Leerlaufkanäle 9, 9', die getrennt voneinander zu einem Tank führen, kann der Entleerungsvorgang schneller erfolgen. Durch einen Y-förmigen Leerlaufkanal 9, der an seinen beiden Y-Armen jeweils einen Pin 7, 7' aufnimmt, kann eine kompakte Bauweise erreicht werden, da keine zwei separate Leerlaufkanäle 9, 9' vorgesehen werden müssen.

Bei einer weiteren vorteilhaften Ausführungsform der erfindungsgemäßen Lösung, ist am Filtergehäusetopf 5 oder an einem darin angeordneten Funktionselement eine Führung 10 vorgesehen, entlang welcher zumindest einer der beiden Pins 7, 7' bei der Montage des Ringfilterelementes 1 zum Leerlaufkanal 9, 9' geführt wird. Eine derartige Führung 10 kann beispielsweise in der Art einer Rampe ausgebildet sein, welche ein beliebiges Einsetzen des Ringfilterelementes 1 ermöglicht, so dass dieses mittels des Pins 7, 7'entlang der Führung 10 in den zugehörigen Leerlaufkanal 9, 9' gleitet und dadurch eine stets richtige Montage gewährleistet werden kann. Eine Fehlmontage des Ringfilterelementes 1 kann dadurch zuverlässig ausgeschlossen werden.

Zweckmäßig weisen die zumindest zwei Pins 7, 7' eine unterschiedliche axiale Länge aufweisen, und/oder einen unterschiedlichen Durchmesser auf, wobei der zugehörige Leerlaufkanal 9, 9' einen komplementären Innendurchmesser aufweist. Hierdurch kann das Schlüssel-Schloss-System nochmals verfeinert werden.

Zweckmäßig sind drei Pins 7, 7', 7" vorgesehen, die in Umfangsrichtung 11 um ca. 120° versetzt zueinander angeordnet sind. Hierdurch kann ein nochmals verbessertes Entleeren des Filtergehäuses 5 im Wartungsfall und ein nochmals verbessertes Schlüssel-Schloss-System geschaffen werden. Diese können in zugehörige und nicht vollständig gezeichnete Leerlaufkanäle 9, 9' und einen weiteren Leerlaufkanal eingreifen.

Bei einer vorteilhaften Weiterbildung sind ebenfalls drei Pins 7, 7', 7" vorgesehen, von denen jedoch nur zwei im Einbauzustand des Ringfilterelements 1 in einen jeweiligen Leerlaufkanal 9, 9' eingreifen und der dritte Pin 7" hohl ausgebildet ist und mit einem Innenraum des Schmutztopfes 8 kommunizierend verbunden ist und in einen nicht gezeigten Entsorgungskanal eingreift. Über den Pin 7", der hohl ausgebildet ist, kann somit der Wassersammelraum bzw. der im Schmutztopf 8 gelegene Schmutzsammelraum entleert werden. Dieser hohl ausgebildete Pin 7" ermöglicht so einen Wasser- und/oder Schmutzablass in einen separaten Wasser-/Schmutzsammelraum oder aber in die Umgebung, wobei in diesem Fall zusätzlich üblicherweise ein Aktivkohlefilter vorgesehen ist, welches noch im abgeschiedenen Wasser vorhandene Kohlenwasserstoffanteile herausfiltert. Die anderen Pins 7, 7', die nicht hohl ausgebildet sind, dienen zum Verschließen der Leerlaufkanäle 9, 9' und greifen somit dichtend in diese ein, sofern sich das Ringfilterelement 1 in seinem Einbauzustand befindet. Bei einem Entfernen des Ringfilterelements 1 werden diese Pins 7,7' aus den Leerlaufkanälen 9, 9' herausgezogen, wodurch das Filtergehäuse 5 leerlaufen kann. Durch insbesondere eine unterschiedliche axiale Länge zwischen den drei Pins 7, 7', 7" kann erreicht werden, dass der in den Entsorgungskanal eingreifende Pin 7" erst dann aus diesem herausgezogen wird, wenn die anderen Pins 7, 7' schon lange aus dem zugehörigen Leerlaufkanal 9, 9' gezogen wurden, so dass die noch im Filtergehäuse 5 vorhandene Flüssigkeit vollständig ablaufen kann, ohne dass die Gefahr besteht, dass die Flüssigkeit gleichzeitig in den Entsorgungskanal gelangt.

Die Erfindung betrifft dabei nicht nur eine komplette Filtereinrichtung 6, bestehend aus Filtergehäuse und Filtergehäusetopf 5 sowie darin angeordnetem Funktionselement und Ringfilterelement 1, sondern auch das Ringfilterelement 1 als separates Bauelement, insbesondere für den Ersatzteilmarkt. Durch die einteilige Ausbildung des Ringfilterelementes 1 zusammen mit dem Schmutztopf 8 und insbesondere durch die einteilige Ausbildung der Pins 7,7' und des Schmutztopfes 8, kann somit ein Komplettteil, insbesondere auch für den Ersatzteilmarkt, geschaffen werden, welches einerseits kostengünstig ist und welches andererseits gewährleistet, dass keine ungeeigneten und nicht autorisierten Fabrikate Verwendung finden, welche die Filterleistung schwächen und dadurch unter Umständen Schäden erzeugen können.

## Patentansprüche

1. Filtereinrichtung (6) mit einem in einem Filtergehäuse stehend angeordneten Ringfilterelement (1), das eine obere Endscheibe (2) und eine untere Endscheibe (3) aufweist, wobei
- das Ringfilterelement (1) zumindest zwei abstehende, stutzenförmige Pins (7,7') aufweist, die beide im Einbauzustand jeweils in einen zugehörigen Leerlaufkanal (9,9') eingreifen,
- der zweite Pin (7') um mindestens 120° in Umfangsrichtung (11) des Ringfilterelements (1) versetzt zum ersten Pin (7) angeordnet ist,
**dadurch gekennzeichnet,**
**dass** drei Pins (7,7',7") vorgesehen sind, die in Umfangsrichtung (11) um ca. 120° versetzt zueinander angeordnet sind.

2. Filtereinrichtung nach Anspruch 1,
**dadurch gekennzeichnet,**
**dass** zumindest zwei Pins (7,7') in zwei separate Leerlaufkanäle (9,9') oder in jeweils ein Teilstück eines gemeinsamen Leerlaufkanals (9) eingreifen.

3. Filtereinrichtung nach Anspruch 1 oder 2,
**dadurch gekennzeichnet,**
**dass** an der unteren Endscheibe (3) ein Schmutztopf (8) mit einem darin angeordneten Wasserabscheider vorgesehen ist, wobei zumindest zwei Pins (7,7') am Schmutztopf (8) angeordnet sind.

4. Filtereinrichtung nach Anspruch 3,
**dadurch gekennzeichnet,**
- **dass** der Wasserabscheider als Coaleszer ausgebildet und an die untere Endscheibe (3) des Ringfilterelements (1) angeschweißt ist, und/oder
- **dass** der Schmutztopf (8) an die untere Endscheibe (3) des Ringfilterelements (1) angeschweißt ist.

5. Filtereinrichtung nach Anspruch 3 oder 4,
**dadurch gekennzeichnet,**
**dass** drei Pins (7,7',7") vorgesehen sind, von denen zwei Pins (7,7') im Einbauzustand des Ringfilterelements (1) in einen jeweils zugehörigen Leerlaufkanal (9,9') und der dritte Pin (7") hohl ausgebildet ist und mit einem Innenraum des Schmutztopfes (8) kommunizierend verbunden ist und in einen Entsorgungskanal eingreift.

6. Filtereinrichtung nach einem der Ansprüche 1 bis 5,
**dadurch gekennzeichnet,**
**dass** am Filtergehäusetopf (5) oder an einem Funktionselement eine Führung (10) vorgesehen ist, welche zumindest einen Pin (7,7') zu dem zugehörigen Leerlaufkanal (9,9') führt.

7. Filtereinrichtung nach einem der Ansprüche 1 bis 6,
**dadurch gekennzeichnet,**
**dass** die Filtereinrichtung (6) als Öl- oder als Kraftstofffilter ausgebildet ist.

8. Filtereinrichtung nach einem der Ansprüche 1 bis 7,
**dadurch gekennzeichnet,**
- **dass** zumindest zwei Pins (7,7') eine unterschiedliche axiale Länge aufweisen, und/oder
- **dass** zumindest zwei Pins (7,7') einen unterschiedlichen Durchmesser aufweisen, wobei der zugehörige Leerlaufkanal (9,9') einen komplementären Innendurchmesser aufweist.

9. Ringfilterelement (1) einer Filtereinrichtung (6) nach einem der Ansprüche 1 bis 8, das eine obere Endscheibe (2) und eine untere Endscheibe (3) aufweist wobei zumindest zwei abstehende, stutzenförmige Pins (7,7') vorgesehen sind, wobei der zweite Pin (7') um mindestens 120° in Umfangsrichtung des Ringfilterelements (1) versetzt zum ersten Pin (7) angeordnet ist, **dadurch gekennzeichnet, dass** drei Pins (7,7',7") vorgesehen sind, die in Umfangsrichtung (11) um ca. 120° versetzt zueinander angeordnet sind.

10. Ringfilterelement nach Anspruch 9,
**dadurch gekennzeichnet,**
- **dass** zumindest zwei Pins (7,7') eine unterschiedliche axiale Länge aufweisen, und/oder
- **dass** zumindest zwei Pins (7,7') einen unterschiedlichen Durchmesser aufweisen, wobei der zugehörige Leerlaufkanal (9,9') einen komplementären Innendurchmesser aufweist.

11. Ringfilterelement nach einem der Ansprüche 9 oder 10,
**dadurch gekennzeichnet,**
- **dass** an der unteren Endscheibe (3) ein Schmutztopf (8) mit einem darin angeordneten Wasserabscheider vorgesehen ist, wobei zumindest zwei Pins (7,7') am Schmutztopf (8) angeordnet sind,
- **dass** drei Pins (7,7',7") vorgesehen sind, von denen ein Pin (7") hohl ausgebildet ist und mit einem Innenraum des Schmutztopfes (8) kommunizierend verbunden ist.

## Claims

1. Filter device (6) comprising a ring filter element (1) which is arranged upright in a filter housing and has an upper end disc (2) and a lower end disc (3), wherein
- the ring filter element (1) has at least two projecting connecting pins (7, 7'), both of which in the installed state engage in a respective associated idle channel (9, 9'),
- the second pin (7') is arranged offset from the first pin (7) by at least 120° in the circumferential direction (11) of the ring filter element (1),
**characterised in that**
three pins (7, 7', 7") are provided, which are arranged offset from one another in the circumferential direction (11) by approximately 120°.

2. Filter device according to claim 1,
**characterised in that**
at least two pins (7, 7') engage in two separate idle channels (9, 9') or engage in a respective part of a common idle channel (9).

3. Filter device according to claim 1 or 2,
**characterised in that**
a soil pot (8) with a water separator arranged therein is provided on the lower end disc (3), at least two pins (7, 7') being arranged on the soil pot (8).

4. Filter device according to claim 3,
**characterised in that**
- the water separator is configured as a coalescer and is welded onto the lower end disc (3) of the ring filter element (1), and/or
- the soil pot (8) is welded onto the lower end disc (3) of the ring filter element (1).

5. Filter device according to claim 3 or 4,
**characterised in that**
three pins (7, 7', 7") are provided, of which, in the installed state of the ring filter element (1), two pins (7, 7') engage in a respective associated idle channel (9, 9') and the third pin (7") has a hollow form and is connected in communication with an internal space of the soil pot (8) and engages in a waste disposal channel.

6. Filter device according to any one of claims 1 to 5,
**characterised in that**
a guide (10) is provided on the filter housing jar (5) or on a functional element, which guide guides at least one pin (7, 7') to the associated idle channel (9, 9').

7. Filter device according to any one of claims 1 to 6,
**characterised in that**
the filter device (6) is configured as an oil or fuel filter.

8. Filter device according to any one of claims 1 to 7,
**characterised in that**
- at least two pins (7, 7') have a different axial length, and/or
- at least two pins (7, 7') have a different diameter, the associated idle channel (9, 9') having a complementary internal diameter.

9. Ring filter element (1) of a filter device (6) according to any one of claims 1 to 8, which has upper end disc (2) and a lower disc (3), wherein at least two projecting connecting pins (7, 7') are provided, wherein the second pin (7') is offset by at least 120° in the circumferential direction of the ring filter element (1) from the first pin (7), **characterised in that**
three pins (7, 7', 7") provided, which are arranged offset from each other in the circumferential direction (11) by approximately 120°.

10. Ring filter element according to claim 9,
**characterised in that**
- at least two pins (7, 7') have a different axial length, and/or
- at least two pins (7, 7') have a different diameter, the associated idle channel (9,9') having a complementary internal diameter.

11. Ring filter element according to any one of claims 9 or 10,
**characterised in that**
- a soil pot (8) with a water separator arranged therein is provided on the lower end disc (3), at least two pins (7, 7') being arranged on the soil pot (8),
- three pins (7, 7', 7") are provided, of which one pin (7") has a hollow form and is connected in communication with an internal space of the soil pot (8).

## Revendications

1. Dispositif de filtre (6) avec un élément de filtre annulaire (1) agencé verticalement dans un boîtier de filtre qui présente un disque d'extrémité supérieur (2) et un disque d'extrémité inférieur (3), dans lequel
- l'élément de filtre annulaire (1) présente au moins deux broches (7, 7') en forme de tubulures qui viennent en prise toutes les deux dans l'état monté respectivement dans un canal de vidange (9, 9') afférent,
- la deuxième broche (7') est agencée en déport d'au moins 120° dans la direction périphérique (11) de l'élément de filtre annulaire (1) par rapport à la première broche (7),
**caractérisé en ce**
**que** trois broches (7, 7', 7") sont prévues, lesquelles sont agencées en déport dans la direction périphérique (11) d'environ 120° les unes des autres.

2. Dispositif de filtre selon la revendication 1,
**caractérisé en ce**
**qu'**au moins deux broches (7, 7') viennent en prise dans deux canaux de vidange (9, 9') séparés ou dans respectivement une pièce partielle d'un canal de vidange (9) commun.

3. Dispositif de filtre selon la revendication 1 ou 2,
**caractérisé en ce**
**qu'**un pot de déchets (8) est prévu au niveau du disque d'extrémité inférieur (3) avec un séparateur d'eau agencé dans celui-ci, dans lequel au moins deux broches (7, 7') sont agencées au niveau du pot de déchets (8).

4. Dispositif de filtre selon la revendication 3,
**caractérisé en ce**
- **que** le séparateur d'eau est réalisé comme coalesceur et est soudé au disque d'extrémité inférieur (3) de l'élément de filtre annulaire (1), et/ou
- **que** le pot de déchets (8) est soudé au disque d'extrémité inférieur (3) de l'élément de filtre annulaire (1).

5. Dispositif de filtre selon la revendication 3 ou 4,
**caractérisé en ce**
**que** trois broches (7, 7', 7") sont prévues, dont deux broches (7, 7') sont réalisées dans l'état monté de l'élément de filtre annulaire (1) dans un canal de vidange (9, 9') afférent respectivement et la troisième broche (7") est réalisée de manière creuse et est reliée par communication avec un espace intérieur du pot de déchets (8) et vient en prise dans un canal d'élimination.

6. Dispositif de filtre selon l'une des revendications 1 à 5,
**caractérisé en ce**
**qu'**un guidage (10) est prévu au niveau du pot de boîtier de filtre (5) ou au niveau d'un élément fonctionnel, lequel mène au moins une broche (7, 7') au canal de vidange (9, 9') afférent.

7. Dispositif de filtre selon l'une des revendications 1 à 6,
**caractérisé en ce**
**que** le dispositif de filtre (6) est réalisé comme filtre à huile ou à carburant.

8. Dispositif de filtre selon l'une des revendications 1 à 7,
**caractérisé en ce**
- **qu'**au moins deux broches (7, 7') présentent une longueur axiale différente, et/ou
- **qu'**au moins deux broches (7, 7') présentent un diamètre différent, dans lequel le canal de vidange (9, 9') afférent présente un diamètre intérieur complémentaire.

9. Elément de filtre annulaire (1) d'un dispositif de filtre (6) selon l'une des revendications 1 à 8, qui présente un disque d'extrémité supérieur (2) et un disque d'extrémité inférieur (3), dans lequel au moins deux broches (7, 7') en forme de tubulures sont prévues, dans lequel la deuxième broche (7') est agencée en déport d'au moins 120° dans la direction périphérique de l'élément de filtre annulaire (1) par rapport à la première broche (7), **caractérisé en ce que**
trois broches (7, 7', 7") sont prévues, lesquelles sont agencées en déport dans la direction périphérique (11) d'environ 120° les unes par rapport aux autres.

10. Elément de filtre annulaire selon la revendication 9,
**caractérisé en ce**
- **qu'**au moins deux broches (7, 7') présentent une longueur axiale différente, et/ou
- **qu'**au moins deux broches (7, 7') présentent un diamètre différent, dans lequel le canal de vidange (9, 9') afférent présente un diamètre intérieur complémentaire.

11. Elément de filtre annulaire selon l'une des revendications 9 ou 10,
**caractérisé en ce**
- **qu'**un pot de déchets (8) est prévu au niveau du disque d'extrémité inférieur (3) avec un séparateur d'eau agencé dans celui-ci, dans lequel au moins deux broches (7, 7') sont agencées au niveau du pot de déchets (8),
- **que** trois broches (7, 7', 7") sont prévues, dont une broche (7") est réalisée de manière creuse et est reliée par communication avec un espace intérieur du pot de déchets (8).
